# EUROPÄISCHE PATENTSCHRIFT

(11) **EP 1 359 805 B1**
(45) Veröffentlichungstag und Bekanntmachung des Hinweises auf die Patenterteilung: **11.05.2016**
(21) Anmeldenummer: 01909717.9
(22) Anmeldetag: 01.02.2001
(51) Int. Cl.: A22C 13/00

(54) **MEHRSCHICHTIGE, BIAXIAL VERSTRECKTE, SIEGELFÄHIGE SCHLAUCHFOLIE ZUR VERPACKUNG UND UMHÜLLUNG VON FLEISCH, FLEISCH MIT KNOCHEN UND PASTÖSEN LEBENSMITTELN UND IHRE VERWENDUNG**
MULTI-LAYERED, BIAXIALLY-ORIENTED, SEALABLE TUBULAR FILM FOR THE PACKAGING AND WRAPPING OF MEAT, MEAT WITH BONES AND PASTE-LIKE FOODSTUFFS AND USE THEREOF
FILM TUBULAIRE MULTICOUCHE, ETIRE BIAXIALEMENT, SOUDABLE, UTILISE POUR EMBALLER ET ENVELOPPER DE LA VIANDE, DE LA VIANDE AVEC OS ET DES ALIMENTS PATEUX ET SON UTILISATION

(43) Veröffentlichungstag der Anmeldung: 12.11.2003
(73) Patentinhaber: Naturin GmbH & Co, 69469 Weinheim (DE)
(72) Erfinder: GRUND, Hartmut, 67166 Otterstadt (DE); LANG, Horst, 69469 Weinheim (DE); SCHAUER, Helmut, 68542 Heddesheim (DE)
(74) Vertreter: Angerhausen, Christoph
(86) Internationale Anmeldenummer: PCT/EP2001/001066
(87) Internationale Veröffentlichungsnummer: WO 2002/060265

(56) Entgegenhaltungen:
- EP-A- 0 467 039
- EP-A- 0 879 560
- DE-A- 4 141 292
- DE-A- 4 339 337
- DE-A- 19 529 603

## Beschreibung

Die Erfindung betrifft eine mehrschichtige, biaxial verstreckte, schrumpffähige, siegelfähige Schlauchfolie und ihre Verwendung zur Verpackung und Umhüllung von Fleisch, Fleisch mit Knochen und pastösen Lebensmitteln.

EP 0 467 039 A beschreibt eine mehrschichtige, schlauchförmige Verpackungshülle für pastöses Füllgut, insbesondere künstliche Wursthülle, auf Basis von Polyamid, welche nach dem Füllen an dem umhüllten Füllgut (insbesondere Wurstmasse) haften bleibt, die so hergestellte Hülle ferner gegenüber Wasserdampf und Luftsauerstoff nur geringe Durchlässigkeit aufweist, damit das Verpackungsgut selbst nach längerer Lagerzeit keinen Gewichtsverlust zeigt, und ferner sich auch kein Gelee zwischen Wurstmasse und Hüllenwand absetzen soll. Diese Verpackungshülle ist aufgebaut aus einer äußeren Schicht auf Basis von aliphatischem Polyamid, aliphatischem Copolyamid oder einer Polymermischung aus wenigstens einer dieser Verbindungen, einer wasserdampfdichten mittleren Schicht aus Polyolefin und haftungsvermittelnder Komponente und einer vorzugsweise gegenüber Sauerstoff dichten inneren Schicht auf Basis von aliphatischen und/oder teilaromatischen Polyamiden und/oder aliphatischen und/oder teilaromatischen Copolyamiden. Eine solche Hülle ist hinsichtlich eines Verpakkungsgutes wie insbesondere Fleisch mit Knochen bezüglich Durchstoßfestigkeit der Schlauchfolie und hohe Festigkeit der Siegelnaht, wenn aus der Folie Beutel hergestellt werden, verbesserungsbedürftig.

Aus der DE 43 39 337 C2 ist bereits eine fünfschichtige Schlauchfolie zur Verpackung und Umhüllung von pastösen Lebensmitteln, insbesondere Wursthülle, auf Basis von Polyamid bekannt. Diese Schlauchfolie besteht aus einer inneren und einer äußeren Schicht aus dem gleichen Polyamidmaterial, einer mittleren Polyolefinschicht sowie aus zwei aus dem gleichen Material bestehenden Haftvermittlerschichten zwischen jeweils innerer Schicht und Mittelschicht und Mittelschicht und äußerer Schicht. Innen- und Außenschicht bestehen aus wenigstens einem aliphatischen Polyamid und/oder wenigstens einem aliphatischen Copolyamid sowie wenigstens einem teilaromatischen Polyamid und/oder wenigstens einem teilaromatischen Copolyamid, wobei der Anteil des teilaromatischen Polyamids und/oder Copolyamids 5 bis 60 Gew.-%, bezogen auf das Gesamtgewicht der Polymermischung aus teilaromatischen und aliphatischen Polyamiden und Copolyamiden beträgt. Einer solchen Schlauchfolie, die durch Coextrusion hergestellt wird, wird durch biaxiales Verstrecken und Thermofixieren ein kontrolliertes Schrumpfvermögen verliehen. Eine solche Schlauchfolie ist hinsichtlich anwendungstechnischer Eigenschaften, die für die Umhüllung bzw. Verpackung von Fleisch, insbesondere Fleisch mit Knochen, wichtig sind, verbesserungsbedürftig. Bei Fleisch mit Knochen besteht die Gefahr, daß hervorstehende Knochen die verpackte Folie nach dem Aufschrumpfen der Verpackungsfolie auf das Verpackungsgut durchstoßen, weil die Durchstoßfestigkeit zu gering ist. Ferner sollten derartige Schlauchfolien zur Verpackung und Umhüllung von Fleisch oder Fleisch mit Knochen und pastösen Lebensmitteln auch auf einfache Weise durch Heißsiegeln verschlossen werden können. Bei aus derartigen Schlauchfolien hergestellten Beuteln kommt es entscheidend auf die Festigkeit der Siegelnaht an. Wenn zum Beispiel aus einem Füllrohr ein Stück Schinken oder Fleisch in einen am unteren Ende durch eine Heißsiegelnaht verschlossenen Beutel aus einer Kunststoffolie fällt, treten in Abhängigkeit vom Gewicht erhebliche Belastungen durch den Fall des Verpackungsguts in den Beutel auf, die dazu führen können, daß die Heißsiegelnaht reißt und der Beutel sich daher am unteren Ende wieder vollständig öffnet. Auch beim späteren Vakuumieren und Schrumpfen der Beutel wird die Heißsiegelnaht extremen Belastungen ausgesetzt. Auch der Transport und die Lagerung der gefüllten Beutel stellt hohe Anforderungen an die Durchstoßfestigkeit der Folie und die Siegelnahtfestigkeit.

Aufgabe der vorliegenden Erfindung ist es daher, eine biaxial verstreckte, schrumpffähige, siegelfähige Schlauchfolie zur Verpackung und Umhüllung von Fleisch, Fleisch mit Knochen und pastösen Lebensmitteln bereitzustellen, die neben den an eine solche Verpackungsfolie zu stellenden Anforderungen wie geringe Wasserdampf- und Sauerstoffdurchlässigkeit eine hohe Durchstoßfestigkeit der Schlauchfolie einerseits und eine hohe Festigkeit der Siegelnaht andererseits aufweist.

Die Aufgabe der Erfindung wird durch eine mehrschichtige, biaxiäl verstreckte, schrumpffähige, siegelfähige Schlauchfolie gelöst, die die kennzeichnenden Merkmale von Anspruch 1 aufweist.

Die Innenschicht enthält wenigstens ein siegelfähiges Copolyamid. Solche an sich bekannten Copolyamide werden aus Monomeren hergestellt, die ausgewählt sind aus der Gruppe Caprolactam, Laurinlactam, Omegaaminoundecansäure, Adipinsäure, Azelainsäure, Sebazinsäure, Decandicarbonsäure, Dodecandicarbonsäure, Terephthalsäure, Isophthalsäure, Tetramethylendiamin, Pentamethylendiamin, Hexamethylendiamin, Octamethylendiamin und Xylylendiamin. Die Wandstärke der Innenschicht liegt zwischen 5 und 16 µm.

Überraschenderweise wird durch den Zusatz eines amorphen Polyamids und/oder eines Homopolyamids und/oder eines modifizierten Polyolefins zu einem Copolyamid in der Innenschicht die Siegelnahtfestigkeit gegenüber reinem Copolyamid signifikant erhöht bzw. werden hohe Siegelnahtfestigkeiten bereits bei niedrigeren Siegeltemperaturen erreicht. Damit weist die erfindungsgemäße Folie erhebliche anwendungstechnische Vorteile auf.

Als amorphe Polyamide für die Innenschicht werden Polyamide verwendet, deren Glasumwandlungstemperatur im trockenen Zustand zwischen 50 und 200 °C liegt. Beispiele hierfür sind Polyamid 6I/6T, Polyamid 6-3-T und Polyamid 6I.

Als Homopolyamide für die Innenschicht werden Polyamide verwendet, die aus den gleichen Monomeren hergestellt werden können wie die bereits oben beschriebenen Copolyamide. Die Homopolyamide können sowohl aliphatischen als auch teilweise aromatischen Charakter haben.

Die modifizierten Polyolefine für die Innenschicht sind Copolymerisate von Ethylen oder Propylen und gegebenenfalls weiteren linearen Alphaolefinen mit 3 bis 8 C-Atomen mit Alpha-Beta-ungesättigten Carbonsäuren, bevorzugt Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen. Weiterhin können die modifizierten Polyolefine modifizierte Homo- oder Copolymere des Ethylens und/oder Propylens und gegebenenfalls weiterer linearer Alphaolefine mit 3 bis 8 C-Atomen sein, die Monomere aus der Gruppe der Alpha-Beta-ungesättigten Dicarbonsäuren, bevorzugt Maleinsäure, Fumarsäure, Itaconsäure oder deren Säureanhydride, Säureester, Säureamide oder Säureimide aufgepfropft enthalten.

Der Hauptbestandteil der Innenschicht ist ein siegelbares Copolyamid oder eine Mischung siegelbarer Copolyamide, wobei dieser Hauptbestandteil in Mengen zwischen 50 und 95 Gew.% vorliegt. Die weiteren Komponenten, amorphes Polyamid und/oder Homopolyamid und/oder modifiziertes Polyolefin können in Mengen von jeweils 1 bis 30 Gew.%, bevorzugt 5 bis 25 Gew.%, bezogen auf die gesamte Innenschicht, dem Hauptbestandteil zugemischt sein.

Die beiden Haftvermittlerschichten weisen bevorzugt die gleiche Zusammensetzung auf und bestehen aus mit funktionellen Gruppen modifizierten Polyolefinen. Bei derartigen modifizierten Polyolefinen handelt es sich um modifizierte Homo- oder Copolymere des Ethylens und/oder Propylens und gegebenenfalls weiterer linearer Alphaolefine mit 3 bis 8 C-Atomen, die Monomere aus der Gruppe der Alpha-Beta-ungesättigten Dicarbonsäuren, wie Maleinsäure, Fumarsäure, Itaconsäure oder deren Säureanhydride, Säureester, Säureamide oder Säureimide aufgepfropft enthalten. Die Wandstärke der jeweiligen Haftvermittlerschicht liegt zwischen 3 und 10 µm.

Als Mittelschicht dient in der erfindungsgemäßen Hülle eine Polyolefinschicht, die bevorzugt aus Homopolymeren von Ethylen oder Propylen und/oder Copolymeren von linearen Alphaolefinen mit 2 bis 8 C-Atomen aufgebaut ist. Vorzugsweise wird für die Mittelschicht lineares Polyethylen niedriger Dichte, Polyethylen hoher Dichte, Polypropylen-Homopolymerisat, Polypropylen-Block- und Polypropylen-Random-Copolymerisat verwendet. Die Wandstärke der Mittelschicht liegt zwischen 6 und 22 µm.

Für die Außenschicht können verschiedene Materialien verwendet werden, nämlich Homopolyamide, allein oder in Mischung, Copolyamide, allein oder in Mischung, Mischungen aus Homo- und Copolyamiden. Zusätzlich kann die Außenschicht auch noch Copolymere von Ethylen mit Vinylalkohol und/oder modifizierte Polyolefine enthalten. Die Wandstärke der Außenschicht liegt zwischen 12 und 43 µm.

Geeignete Homo- und Copolyamide sind bekannt und können aus entsprechenden Monomeren wie z.B. Caprolactam, Laurinlactam, Omegaaminoundecansäure, Adipinsäure, Azelainsäure, Sebazinsäure, Decandicarbonsäure, Dodecandicarbonsäure, Terephthalsäure, Isophthalsäure, Tetramethylendiamin, Pentamethylendiamin, Hexamethylendiamin, Octamethylendiamin und Xylylendiamin, hergestellt werden.

Bevorzugte Homo- und Copolyamide sind Polyamid 6, Polyamid 12, Polyamid 610, Polyamid 612, Polyamid MXD6, Polyamid 6/66, Polyamid 6/12, Polyamid 6I/6T.

Copolymere von Ethylen mit Vinylalkohol werden durch vollständige Verseifung von Copolymeren des Ethylens mit Vinylacetat hergestellt. Im allgemeinen liegt der Ethylen-Anteil in den Ethylen-Vinylalkohol-Copolymeren zwischen 27 und 48 Mol%. Für den Zusatz in der Außenschicht werden Ethylen-Vinylalkohol-Copolymere bevorzugt, deren Ethylen-Anteil zwischen 27 und 38 Mol% beträgt.

Die modifizierten Polyolefine sind Copolymerisate von Ethylen oder Propylen und gegebenenfalls weiteren linearen Alphaolefinen mit 3 bis 8 C-Atomen mit Alpha-Beta-ungesättigten Carbonsäuren, bevorzugt Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen. Weiterhin können die modifizierten Polyolefine modifizierte Homo- oder Copolymere des Ethylens und/oder Propylens und gegebenenfalls weiterer linearer Alphaolefine mit 3 bis 8 C-Atomen sein, die Monomere aus der Gruppe der Alpha-Beta-ungesättigten Dicarbonsäuren, bevorzugt Maleinsäure, Fumarsäure, Itaconsäure oder deren Säureanhydride, Säureester, Säureamide oder Säureimide aufgepfropft enthalten.

Der Hauptbestandteil der Außenschicht sind Homopolyamide, allein oder in Mischung, Copolyamide, allein oder in Mischung, oder Mischungen aus Homo- und Copolyamiden, wobei dieser Hauptbestandteil in Mengen zwischen 50 und 100 Gew.% vorliegt. Bei Vorliegen weiterer Komponenten wie Copolymeren von Ethylen mit Vinylalkohol und modifizierten Polyolefinen sind diese in Mengen von jeweils 0 bis 40 Gew.%, bezogen auf die gesamte Außenschicht, dem Hauptbestandteil zugemischt.

Daneben können in der Schlauchfolie übliche Hilfsstoffe, zum Beispiel Antiblockmittel, Stabilisatoren, Antistatika oder Gleitmittel enthalten sein. Diese Hilfsstoffe werden gewöhnlich in Mengen von 0,1 bis 5 Gew.% zugesetzt. Weiterhin kann die Folie durch Zugabe von Pigmenten oder Pigmentmischungen eingefärbt werden.

Die erfindungsgemäßen Schlauchfolien werden durch Coextrusion hergestellt, wobei die einzelnen Polymeren für die unterschiedlichen Schichten in fünf Extrudern plastifiziert und homogenisiert und sodann die fünf Schmelzströme entsprechend den gewünschten Einzelwandstärkenverhältnissen durch einen Fünfschichtextrusionskopf zu einem Primärrohr ausgeformt, biaxial verstreckt und thermofixiert werden.

Die erfindungsgemäßen Schlauchfolien haben Gesamtwandstärken von 30 bis 100, bevorzugt 50 bis 90 µm.

Die erfindungsgemäßen Schlauchfolien sind überraschenderweise den Schlauchfolien der DE 43 39 337 C2 sowohl hinsichtlich der Siegelnahtfestigkeit als auch der Durchstoßfestigkeit deutlich überlegen.

Für die Bestimmung der Siegelnahtfestigkeit wurden die jeweiligen Schlauchfolien quer zur Laufrichtung innenseitig mit einem Laborschweißgerät SGPE 20 der Fa. W. Kopp Verpakkungsmaschinen verschweißt. Aus den verschweißten Schlauchfolien wurden 25 mm breite Streifenproben derart entnommen, daß die Schweißnaht quer zur Längsrichtung des Streifens lag. Die Streifenproben wurden auf einer Zugprüfmaschine der Fa. Instron mit einer Abzugsgeschwindigkeit von 500 mm/min bis zum Bruch der Schweißnaht auseinandergezogen. Die dabei erreichte Maximalkraft wird im Folgenden als Siegelnahtfestigkeit bezeichnet.

Als Maß für die Durchstoßfestigkeit wird die Schädigungsarbeit im Durchstoßversuch ermittelt.

Die Bestimmung der Schädigungsarbeit erfolgte in Anlehnung an die DIN 53373, wobei jedoch abweichend zu dieser DIN-Norm als Stoßkörper ein gehärteter Zylinderstift Form A mit 3 mm Durchmesser entsprechend DIN EN 28 734 eingesetzt wurde und die Prüfgeschwindigkeit 500 mm/min betrug. Die Schädigungsarbeit ist die bis zum ersten Anriß der Probe verbrauchte Energie.

Die Schlauchfolie nach DE 43 39 337 C2 (Vergleichsbeispiel 1) konnte bei Siegeltemperaturen von 140 und 200 °C nicht verschweißt werden, während die erfindungsgemäßen Schlauchfolien bereits bei einer Siegeltemperatur von 140 °C eine befriedigende bis gute Siegelnahtfestigkeit erreichten. Bei einer Siegeltemperatur von 200 °C ergeben sich bei den erfindungsgemäßen Schlauchfolien Siegelnahtfestigkeiten, die um mindestens 15 % über denen der Vergleichsbeispiele liegen.

Auch im Durchstoßversuch zeigen die erfindungsgemäßen Schlauchfolien leicht bis deutlich höhere Werte für die Schädigungsarbeit.

Die Erfindung wird durch die nachfolgenden Beispiele näher erläutert:

### Beispiel 1:

Die einzelnen Polymeren für die unterschiedlichen Schichten wurden in fünf Extrudern plastifiziert und homogenisiert. Die fünf Schmelzeströme wurden entsprechend den gewünschten Einzelwandstärkenverhältnissen einem Fünfschichtextrusionskopf zugeführt und zu einem Primärrohr ausgeformt, biaxial verstreckt und thermofixiert. Das Primärrohr hatte einen Durchmesser von 45,5 mm und eine mittlere Gesamtwandstärke von 0,49 mm. Es wurde mit Infrarotstrahlung auf 109 °C aufgeheizt und mit einem Flächenreckverhältnis von 9,7 verstreckt. Der biaxial verstreckte Schlauch wurde thermofixiert, flachgelegt und aufgewickelt. Die mittlere Gesamtwandstärke des Schlauches betrug 50 µm. Die Liegebreite betrug 209 mm.

Der Schichten des fertigen Schlauches bestanden aus den folgenden Polymeren mit den angegebenen Einzelwandstärken:

| | |
|---|---|
| 1. Schicht (Außenschicht): | Polyamid 6, Ultramid B4 F der Fa. BASF AG, 20 µm |
| 2. Schicht: | Haftvermittler, modifiziertes Polyethylen, Admer NF 478 E der Fa Mitsui Chemicals Inc., 5 µm |
| 3. Schicht: | Polyethylen (LDPE), Lupolen 1804 H der Fa. BASF AG, 10 µm |
| 4. Schicht: | Haftvermittler (wie 2. Schicht), 5 µm |
| 5. Schicht (Innenschicht): | Mischung aus 90 % Polyamid 6/12, Grilon CF6S der Fa. EMS-Chemie und 10 % Polyamid 12, UBE Nylon 3030 B der Fa. UBE Industries Ltd., 10 µm |

Folgende Werte für die Siegelnahtfestigkeit wurden ermittelt:

| | |
|---|---|
| Siegeltemperatur 140°C: | 7 N/25 mm |
| Siegeltemperatur 200°C: | 95 N/25 mm |

Die Schädigungsarbeit betrug 380 mJ.

### Beispiel 2:

Die einzelnen Polymeren für die unterschiedlichen Schichten wurden in fünf Extrudern plastifiziert und homogenisiert. Die fünf Schmelzeströme wurden entsprechend den gewünschten Einzelwandstärkenverhältnissen einem Fünfschichtextrusionskopf zugeführt und zu einem Primärrohr ausgeformt, biaxial verstreckt und thermofixiert. Das Primärrohr hatte einen Durchmesser von 45,5 mm und eine mittlere Gesamtwandstärke von 0,48 mm. Es wurde mit Infrarotstrahlung auf 108 °C aufgeheizt und mit einem Flächenreckverhältnis von 9,6 verstreckt. Der biaxial verstreckte Schlauch wurde thermofixiert, flachgelegt und aufgewickelt. Die mittlere Gesamtwandstärke des Schlauches betrug 50 µm. Die Liegebreite betrug 209 mm.

Der Schichten des fertigen Schlauches bestanden aus den folgenden Polymeren mit den angegebenen Einzelwandstärken:

| | |
|---|---|
| 1. Schicht (Außenschicht): | Polyamid 6/66, Ultramid C35 der Fa. BASF AG, 18 µm |
| 2. Schicht: | Haftvermittler, modifiziertes Polyethylen, Admer NF 478 E der Fa Mitsui Chemicals Inc., 6 µm |
| 3. Schicht: | Polyethylen (LDPE), Lupolen 1804 H der Fa. BASF AG, 10 µm |
| 4. Schicht: | Haftvermittler (wie 2. Schicht), 6 µm |
| 5. Schicht (Innenschicht): | Mischung aus 90 % Polyamid 6/12, Grilon CF6S der Fa. EMS-Chemie und 10 % Ionomerharz, Surlyn 1652 der Fa. Du Pont de Nemours GmbH, 10 µm |

Folgende Werte für die Siegelnahtfestigkeit wurden ermittelt:

| | |
|---|---|
| Siegeltemperatur 140°C: | 75 N/25 mm |
| Siegeltemperatur 200°C: | 93 N/25 mm |

Die Schädigungsarbeit betrug 455 mJ.

### Beispiel 3:

Die einzelnen Polymeren für die unterschiedlichen Schichten wurden in fünf Extrudern plastifiziert und homogenisiert. Die fünf Schmelzeströme wurden entsprechend den gewünschten Einzelwandstärkenverhältnissen einem Fünfschichtextrusionskopf zugeführt und zu einem Primärrohr ausgeformt, biaxial verstreckt und thermofixiert. Das Primärrohr hatte einen Durchmesser von 45,5 mm und eine mittlere Gesamtwandstärke von 0,50 mm. Es wurde mit Infrarotstrahlung auf 109 °C aufgeheizt und mit einem Flächenreckverhältnis von 10,0 verstreckt. Der biaxial verstreckte Schlauch wurde thermofixiert, flachgelegt und aufgewickelt. Die mittlere Gesamtwandstärke des Schlauches betrug 50 µm. Die Liegebreite betrug 210 mm.

Der Schichten des fertigen Schlauches bestanden aus den folgenden Polymeren mit den angegebenen Einzelwandstärken:

| | |
|---|---|
| 1. Schicht (Außenschicht): | Polyamid 6/66, Ultramid C35 der Fa. BASF AG, 20 µm |
| 2. Schicht: | Haftvermittler, modifiziertes Polyethylen, Admer NF 478 E der Fa Mitsui Chemicals Inc., 5 µm |
| 3. Schicht: | Polyethylen (LLDPE), Dowlex 2049 E der Fa. DOW Chemical Company, 10 µm |
| 4. Schicht: | Haftvermittler (wie 2. Schicht), 6 µm |
| 5. Schicht (Innenschicht): | Mischung aus 85 % Polyamid 6/12, Grilon CF6S der Fa. EMS-Chemie und 5 % Polyamid 6I/6T, Grivory G21 der Fa. EMS-Chemie und 10 % Ionomerharz, Surlyn 1652 der Fa. Du Pont de Nemours GmbH, 9 µm |

Folgende Werte für die Siegelnahtfestigkeit wurden ermittelt:

| | |
|---|---|
| Siegeltemperatur 140°C: | 12 N/25 mm |
| Siegeltemperatur 200°C: | 96 N/25 mm |

Die Schädigungsarbeit betrug 460 mJ.

### Vergleichsbeispiel 1

Entsprechend DE 43 39 337C2 wurde eine fünfschichtige Schlauchfolie mit folgendem Aufbau hergestellt:

| | |
|---|---|
| 1. Schicht (Außenschicht): | Mischung aus 95 % Polyamid 6, Durethan B40 F der Bayer AG und 5 % Polyamid 6I/6T, Grivory G21 der Fa. EMS-Chemie, 20 µm |
| 2. Schicht: | Haftvermittler, modifiziertes Polyethylen, Admer NF 478E der Fa. Mitsui Chemicals Inc., 4 µm |
| 3. Schicht: | Polyethylen (LLDPE), Dowlex 2049 E der Fa. DOW Chemical Company, 14 µm |
| 4. Schicht: | Haftvermittler (wie 2. Schicht), 4 µm |
| 5. Schicht (Innenschicht): | Mischung aus 95 % Polyamid 6, Durethan B40 F der Bayer AG und 5 % Polyamid 6I/6T, Grivory G21 der Fa. EMS-Chemie, 8 µm |

Folgende Werte für die Siegelnahtfestigkeit wurden ermittelt:

| | |
|---|---|
| Siegeltemperatur 140°C: | nicht verschweißt |
| Siegeltemperatur 200°C: | nicht verschweißt |

Die Schädigungsarbeit betrug 315 mJ.

### Vergleichsbeispiel 2

Wie im Beispiel 1 wurde eine fünfschichtige Schlauchfolie hergestellt mit dem Unterschied, daß die fünfte Schicht (Innenschicht) aus reinem Polyamid 6/12, Grilon CF6S der Fa. EMS-Chemie bestand.

Folgende Werte für die Siegelnahtfestigkeit wurden ermittelt:

| | |
|---|---|
| Siegeltemperatur 140°C: | 35 N/25 mm |
| Siegeltemperatur 200°C: | 81 N/25 mm |

Die Schädigungsarbeit betrug 375 mJ.

## Patentansprüche

1. Mehrschichtige, bevorzugt fünfschichtige, biaxial verstreckte, schrumpffähige, siegelfähige Schlauchfolie zur Verpackung und Umhüllung von Fleisch, Fleisch mit Knochen oder pastösen Lebensmitteln, die aufgebaut ist aus:
- einer inneren Schicht aus wenigstens einem siegelfähigen Copolyamid in Mengen von 50 bis 95 Gew. %, und wenigstens einem amorphen Polyamiden und/oder wenigstens einem Homopolyamid und/oder wenigstens einem modifizierten Polyolefin;
- einer mittleren Polyolefinschicht;
- einer äußeren Schicht aus wenigstens einem Homopolyamid und/oder wenigstens einem Copolyamid und/oder wenigstens einem Copolymer von Ethylenvinylalkohol und/oder einem modifizierten Polyolefin; und
- zwei bevorzugt aus dem gleichen Material bestehenden Haftvermittlerschichten zwischen innerer Schicht und Mittelschicht und zwischen Mittelschicht und äußerer Schicht;
**dadurch gekennzeichnet, dass**
- die amorphen Polyamide der inneren Schicht eine Glasumwandlungstemperatur im trockenen Zustand zwischen 50 und 200 °C aufweisen;
- die in der inneren Schicht enthaltenen weiteren Komponenten, amorphes Polyamid, Homopolyamid und modifiziertes Polyolefin, in Mengen von jeweils 1 bis 30 Gew.%, bezogen auf die gesamte Innenschicht, zugemischt sind;
- die beiden Haftvermittlerschichten aus mit funktionellen Gruppen modifizierten Poly-olefinen bestehen, die modifizierte Homo- oder Copolymere des Ethylens und/oder Propylens und gegebenenfalls weiteren linearen Alphaolefinen mit 3 bis 8 C-Atomen, die Monomere aus der Gruppe der Alpha-Beta-ungesättigten Dicarbonsäuren, wie Maleinsäure, Fumarsäure, Itaconsäure oder deren Säureanhydride, Säureester, Säureamide oder Säureimide aufgepfropft enthalten, sind; und
- der Hauptbestandteil der Außenschicht Homopolyamide sind, allein oder in Mischung, Copolyamide, allein oder in Mischung, oder Mischungen aus Homo- und Copolyamiden, wobei dieser Hauptbestandteil in Mengen zwischen 50 und 100 Gew.% vorliegt.

2. Schlauchfolie nach Anspruch 1, **dadurch gekennzeichnet, dass** die innere Schicht Copolyamide enthält, welche aus Monomeren hergestellt sind, die ausgewählt sind aus der Gruppe Caprolactam, Laurinlactam, Omegaaminoundecansäure, Adipinsäure, Azelainsäure, Sebazinsäure, Decandicarbonsäure, Dodecandicarbonsäure, Terephthalsäure, Isophthalsäure, Tetramethylendiamin, Pentamethylendiamin, Hexamethylendiamin, Octamethylendiamin und Xylylendiamin.

3. Schlauchfolie nach Anspruch 1, **dadurch gekennzeichnet**, das die Glasumwandlungstemperatur der amorphen Polyamide bevorzugt zwischen 90 und 160 °C liegt.

4. Schlauchfolie nach einem der Ansprüche 1 bis 3, **dadurch gekennzeichnet, dass** die innere Schicht Homopolyamide enthält, welche aus Monomeren hergestellt sind, die ausgewählt sind aus der Gruppe Caprolactam, Laurinlactam, Omegaaminoundecansäure, Adipinsäure, Azelainsäure, Sebazinsäure, Decandicarbonsäure, Dodecandicarbonsäure, Terephthalsäure, Isophthalsäure, Tetramethylendiamin, Pentamethylendiamin, Hexamethylendiamin, Octamethylendiamin und Xylylendiamin.

5. Schlauchfolie nach einem der Ansprüche 1 bis 4, **dadurch gekennzeichnet, dass** die innere Schicht modifizierte Polyolefine enthält, die Copolymerisate von Ethylen oder Propylen und gegebenenfalls weiteren linearen Alphaolefinen mit 3 bis 8 C-Atomen mit Alpha-Beta-ungesättigten Carbonsäuren, bevorzugt Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen, sind.

6. Schlauchfolie nach den Ansprüchen 1 bis 5, **dadurch gekennzeichnet, dass** die in der inneren Schicht enthaltenen weiteren Komponenten, amorphes Polyamid, Homopolyamid und modifiziertes Polyolefin, in Mengen von jeweils 5 bis 25 Gew.%, bezogen auf die gesamte Innenschicht, zugemischt sind.

7. Schlauchfolie nach einem der Ansprüche 1 bis 6, **dadurch gekennzeichnet, dass** die Mittelschicht aus Polyolefin aus Homopolymeren von Ethylen oder Propylen und/oder Copolymeren von linearen Alphaolefinen mit 2 bis 8 C-Atomen aufgebaut ist.

8. Schlauchfolie nach Anspruch 7, **dadurch gekennzeichnet, dass** die Polyolefine der Mittelschicht vorzugsweise aus linearem Polyethylen niedriger Dichte, Polyethylen hoher Dichte, Polypropylen-Homopolymerisaten, Polypropylen-Block- und Polypropylen-Random-Copolymerisaten bestehen.

9. Schlauchfolie nach Anspruch 1, **dadurch gekennzeichnet, dass** die modifizierten Polyolefine der beiden Haftvermittlerschichten Copolymerisate von Ethylen oder Propylen und gegebenenfalls weiteren linearen Alphaolefinen mit 3 bis 8 C-Atomen mit Alpha-Beta-ungesättigten Carbonsäuren wie Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen, sind.

10. Schlauchfolie nach einem der Ansprüche 1 bis 9, **dadurch gekennzeichnet, dass** die Außenschicht aus einer Mischung aus wenigstens einem Homopolyamid und/oder einem Copolyamid besteht, welche aus Monomeren hergestellt sind, die ausgewählt sind aus der Gruppe Caprolactam, Laurinlactam, Omegaaminoundecansäure, Adipinsäure, Azelainsäure, Sebazinsäure, Decandicarbonsäure, Dodecandicarbonsäure, Terephthalsäure, Isophthalsäure, Tetramethylendiamin, Pentamethylendiamin, Hexamethylendiamin, Octamethylendiamin und Xylylendiamin.

11. Schlauchfolie nach Anspruch 10, **dadurch gekennzeichnet, dass** die Außenschicht zusätzlich zu Homopolyamid und/oder Copolyamid ein modifiziertes Polyolefin enthält, das durch Copolymerisation von Ethylen oder Propylen und gegebenenfalls weiteren linearen Alphaolefinen mit 3 bis 8 C-Atomen mit Alpha-Beta-ungesättigten Carbonsäuren wie Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen, hergestellt ist.

12. Schlauchfolie nach Anspruch 10, **dadurch gekennzeichnet, dass** die Außenschicht zusätzlich zu Homopolyamid und/oder Copolyamid ein Copolymer aus Ethylenvinylalkohol enthält, wobei der Ethylen-Anteil im Ethylenvinylalkohol-Copolymeren zwischen 27 und 48 Mol%, bevorzugt zwischen 27 und 38 Mol% beträgt.

13. Schlauchfolie nach den Ansprüchen 10 bis 12, **dadurch gekennzeichnet, dass** der Anteil an modifiziertem Polyolefin und/oder Ethylenvinylalkohol-Copolymer 0 bis 40 Gew.%, bezogen auf die gesamte Außenschicht, beträgt.

14. Schlauchfolie nach einem der Ansprüche 1 bis 13, **dadurch gekennzeichnet, dass** sie aus einer coextrudierten und biaxial verstreckten Schlauchfolie besteht, welche thermofixiert ist.

15. Schlauchfolie nach einem der Ansprüche 1 bis 14, **dadurch gekennzeichnet, dass** ihre Wandstärke 30 bis 100, vorzugsweise 50 bis 90, µm beträgt.

16. Verwendung der Schlauchfolie nach einem der Ansprüche 1 bis 15 zur Verpackung von Fleisch, Fleisch mit Knochen und pastösen Lebensmitteln.

17. Beutel, **dadurch gekennzeichnet, dass** er aus einer Schlauchfolie nach einem der Ansprüche 1 bis 15 durch Verschweißen oder Siegeln der Innenschicht mit sich selbst hergestellt ist.

18. Verwendung eines nach Anspruch 17 hergestellten Beutels zur Verpackung von pastösen Lebensmitteln, Fleisch oder Fleisch mit Knochen.

## Claims

1. A multilayered, preferably half-layered, biaxially oriented, shrinkable, sealable tubular film for the packaging and wrapping of meat, meat with bones, or paste-like foodstuffs, the tubular film is composed of:
- an inner layer comprised of at least one sealable copolyamide in the amount of between 50 and 95 wt.-% and at least one amorphous polyamide and/or at least one homopolyamide, and/or at least one modified polyolefin;
- a middle polyolefin layer;
- an outer layer, comprised of one homopolyamide and/or at least one copolyamide and/or at least one copolymer of ethylene-vinyl alcohol and/or one modified polyolefin; and
- two adhesion-promoting layers that are preferably comprised of the same material between the inner layer and the middle layer and between the middle layer and the outer layer;
**characterized in that**
- the amorphous polyamides of the inner layer comprise a glass transition temperature between 50 and 200 °C in dry state;
- each of the further components included in the inner layer, amorphous polyamide, homopolyamide and modified polyolefin, are admixed in the amount of 1 to 30 wt.-% with respect to the entire inner layer;
- both of the two adhesion-promoting layers are comprised of polyolefins modified with functional groups that are modified homo-or copolymers of ethylene and/or propylene and, if applicable, further linear α-olefine having 3-8 C-atoms that comprise grafted polymers of the group of the α-β-unsaturated dicarboxylic acid, like maleic acid, fumaric acid, itaconic acid, or their acid anhydrides, acid ester, acid amide or acid imide; and
- the main constituent of the outer layer are homopolyamides, solely or in mixture, copolyamids, soleley or in mixture, or mixtures of homo- and copolyamides, wherein set main constituent is present in amounts between 50 and 100 wt.-%.

2. The tubular film according to claim 1, wherein the inner layer includes copolyamides produced from monomers which are caprolactam, laurinlactam, ω-aminoundecanoic acid, adipic acid, azelaic acid, sebacic acid, decanedicarboxylic acid, dodecanedicarboxylic acid, terephthalic acid, isophthalic acid, tetramethylenediamine, pentamethylenediamine, hexamethylenediamine, octamethylenediamine, or xylylenediamine.

3. The tubular film according to claim 1, wherein the glass transition temperature of the amorphous polyamides is between 90 and 160°C.

4. The tubular film according to any one of claims 1 to 3, wherein the inner layer includes homopolyamides produced from monomers which are caprolactam, laurinlactam, ω-aminoundecanoic acid, adipic acid, azelaic acid, sebacic acid, decanedicarboxylic acid, dodecanedicarboxylic acid, terephthalic acid, isophthalic acid, tetramethylenediamine, pentamethylenediamine, hexamethylenediamine, octamethylenediamine, or xylylenediamine.

5. The tubular film according to any one of claims 1 to 4, **characterized in that** the inner layer contains modified polyolefins that are copolymers of ethylene and propylene and, if applicable, further linear α-olefines with 3 to 8 C-atoms with α, β-unsaturated carboxylic acids, preferably acrylic acid, methacrylic acid and/or their metallic salts and/or alkyl ester or respective graft copolymers of the mentioned monomers on polyolefin or partially saponified ethylene-vinyl acetate polymers, that are, if applicable, graft polymerized with an α,β-unsaturated carboxylic acid and comprise a low degree of saponification, or their mixtures.

6. The tubular film according to any one of claims 1 to 5, wherein each of the other components included in the inner layer, amorphous polyamide, homopolyamide and modified polyolefin, can be admixed in amounts of from 5 to 25 wt.-% relative to the overall inner layer.

7. The tubular film according to any one of claims 1 to 6, wherein the polyolefin middle layer comprises one or more of homopolymers of ethylene or propylene and copolymers of linear α-olefins having from 2 to 8 C-atoms.

8. The tubular film according to claim 7, wherein the polyolefins of the middle layer are comprised of linear low-density polyethylene, high-density polyethylene, polypropylene homopolymers, polypropylene block copolymers, or polypropylene random copolymers.

9. The tubular film according to claim 1, **characterized in that** the modified polyolefins of both adhesion-promoting layers are copolymers of ethylene and propylene and, if applicable, further linear α-olefins having 3 to 8 C-atoms with α,β-unsaturated carbocyclic acids like acrylic acids, methacrylic acids and/or their metallic salts and/or their alkyl esters, or respective graft copolymers of the mentioned monomers of polyolefin, or partially saponified ethylene-vinyl acetate copolymers that are, if applicable, graft polymerized with an α,β-unsaturated carboxylic acid and have a low saponification level, or their mixtures.

10. The tubular film according to any one of claims 1 to 9, **characterized in that** the outer layer consists of a mixture of at least one homopolyamide and/or one copolyamide, which are made from monomers that are selected from the group caprolactam, laurinlactam, ω-aminoundecanoic acid, adipic acid, azelaic acid, sebacic acid, decanedicarboxylic acid, dodecanedicarboxylic acid, terephthalic acid, isophthalic acid, tetramethylenediamine, pentamethylenediamine, hexamethylenediamine, octamethylenediamine, octamethylenediamine and xylylenediamine.

11. The tubular film according to claim 10, **characterized in that** the outer layer comprises an addition to homopolyamide and/or copolyamide a modified polyolefin that is made by copolymerization of ethylene or propylene and, if applicable, further linear α-olefins having from 3 to 8 C-atoms, with α,β-unsaturated carboxylic acids like acrylic acid, methacrylic acid and/or their metallic salts or their alkyl ester, or respective graft copolymers of the mentioned monomers of polyolefin, or partially saponified ethylene-vinyl acetate copolymers that are, if applicable, graft polymerized with an α,β-unsaturated carboxylic acid and having a low degree of saponification, or mixtures thereof.

12. The tubular film according to claim 10, wherein the outer layer, in addition to one or more of homopolyamide and copolyamide, includes a copolymer of ethylene vinyl alcohol, the amount of ethylene in the ethylene vinyl alcohol copolymer being between 27 and 48 mole-%, and preferably between 27 and 38 mole-%.

13. The tubular film according to any one of claims 10 to 12, wherein the amount of one or more of modified polyolefin and ethylene vinyl alcohol copolymer is from 0 to 40 wt.-% relative to the overall outer layer.

14. The tubular film according to any one of claims 1 to 13, wherein the tubular film is comprised of a coextruded and biaxially stretched tubular film which has been subjected to heat-setting.

15. The tubular film according to any one of claims 1 to 14, wherein the wall thickness thereof is from 30 to 100, and preferably from 50 to 90 µm.

16. Use of the tubular film according to any one of claims 1 to 15 for the packaging of meat, meat with bones, and paste-like foodstuffs.

17. Bag, **characterized in that** it is manufactured from a tubular film according to any one of claims 1 to 15 by welding or sealing of the inner layer of the film on itself.

18. Use of a bag manufactured according to claim 17 for packaging of paste-like foods stuffs, meat, or meat with bones.

## Revendications

1. Film tubulaire multicouche, de préférence à cinq couches, biorienté, rétractable, soudable, pour emballer et envelopper de la viande, de la viande avec os ou des aliments pâteux, constitué
- d'une couche intérieure constituée d'au moins un copolyamide soudable en des quantités de 50 à 95 % en poids, et d'au moins un polyamide amorphe, et/ou d'au moins un homopolyamide, et/ou d'au moins une polyoléfine modifiée ;
- d'une couche centrale de polyoléfine ;
- d'une couche extérieure constituée d'au moins un homopolyamide et/ou d'au moins un copolyamide et/ou d'au moins un copolymère d'éthylène-alcool vinylique et/ou d'une polyoléfine modifiée ; et
- de deux couches d'un promoteur d'adhérence, constituées de préférence du même matériau, entre la couche intérieure et la couche centrale et entre la couche centrale et la couche extérieure ;
**caractérisé en ce que**
- les polyamides amorphes de la couche intérieure présentent une température de transition vitreuse à l'état sec comprise entre 50 et 200°C ;
- les autres composants contenus dans la couche intérieure, le polyamide amorphe, l'homopolyamide et la polyoléfine modifiée, sont ajoutés en des quantités chacun de 1 à 30 % en poids, par rapport à la couche intérieure totale ;
- les deux couches du promoteur d'adhérence sont constituées de polyoléfines modifiées par des groupes fonctionnels, qui sont des homo- ou des copolymères modifiés de l'éthylène et/ou du propylène et éventuellement d'autres alpha-oléfines linéaires ayant 3 à 8 atomes de carbone, qui contiennent, greffés, les monomères du groupe des acides dicarboxyliques alpha-bêta-insaturés, tels que l'acide maléique, l'acide fumarique, l'acide itaconique ou ses anhydrides d'acide, les esters d'acides, les amides d'acides ou les imides d'acides ; et
- le constituant principal de la couche extérieure est constitué d'homopolyamides, à titre individuel ou en mélange, de copolyamides, à titre individuel ou en mélange, ou de mélanges d'homo- et de copolyamides, ce constituant principal étant présent en des quantités comprises entre 50 et 100 % en poids.

2. Film tubulaire selon la revendication 1, **caractérisé en ce que** la couche intérieure contient des copolyamides qui sont fabriqués à partir de monomères qui sont choisis dans le groupe consistant en le caprolactame, le laurinelactame, l'acide oméga-aminoundécanoïque, l'acide adipique, l'acide azélaïque, l'acide sébacique, l'acide décanedicarboxylique, l'acide dodécanedicarboxylique, l'acide téréphtalique, l'acide isophtalique, la tétraméthylènediamine, la pentaméthylènediamine, l'hexaméthylènediamine, l'octaméthylènediamine et la xylylènediamine.

3. Film tubulaire selon la revendication 1, **caractérisé en ce que** la température de transition vitreuse des polyamides amorphes est de préférence comprise entre 90 et 160°C.

4. Film tubulaire selon l'une des revendications 1 à 3, **caractérisé en ce que** la couche intérieure contient des homopolyamides, qui sont fabriqués à partir de monomères qui sont choisis dans le groupe consistant en le caprolactame, le laurinelactame, l'acide oméga-aminoundécanoïque, l'acide adipique, l'acide azélaïque, l'acide sébacique, l'acide décanedicarboxylique, l'acide dodécanedicarboxylique, l'acide téréphtalique, l'acide isophtalique, la tétraméthylènediamine, la pentaméthylènediamine, l'hexaméthylènediamine, l'octaméthylènediamine et la xylylènediamine.

5. Film tubulaire selon l'une des revendications 1 à 4, **caractérisé en ce que** la couche intérieure contient des polyoléfines modifiées, qui sont des copolymères de l'éthylène ou du propylène et éventuellement d'autres alpha-oléfines linéaires ayant 3 à 8 atomes de carbone, avec des acides carboxyliques alpha-bêta-insaturés, de préférence l'acide acrylique, l'acide méthacrylique et/ou leurs sels métalliques et/ou leurs esters alkyliques, ou les copolymères greffés correspondants des monomères mentionnés sur des polyoléfines ou des copolymères éthylène/acétate de vinyle partiellement saponifiés, qui éventuellement sont polymérisés par greffage avec un acide carboxylique alpha-bêta-insaturé, et présentent un faible degré de saponification, ou les mélanges de ceux-ci.

6. Film tubulaire selon les revendications 1 à 5, **caractérisé en ce que** les autres composants contenus dans la couche intérieure, le polyamide amorphe, l'homopolyamide et la polyoléfine modifiée, sont ajoutés en des quantités chacun de 5 à 25 % en poids, par rapport à la couche intérieure totale.

7. Film tubulaire selon l'une des revendications 1 à 6, **caractérisé en ce que** la couche centrale de polyoléfine est constituée d'homopolymères de l'éthylène ou du propylène et/ou de copolymères d'alpha-oléfines linéaires ayant 2 à 8 atomes de carbone.

8. Film tubulaire selon la revendication 7, **caractérisé en ce que** les polyoléfines de la couche centrale sont constituées de préférence d'un polyéthylène basse densité linéaire, d'un polyéthylène haute densité, d'homopolymères du polypropylène, de copolymères à blocs de polypropylène et de copolymères statistiques de polypropylène.

9. Film tubulaire selon la revendication 1, **caractérisé en ce que** les polyoléfines modifiées des deux couches du promoteur d'adhérence sont des copolymères de l'éthylène et du propylène et éventuellement d'autres alpha-oléfines linéaires ayant 3 à 8 atomes de carbone avec des acides carboxyliques alpha-bêta-insaturés, de préférence l'acide acrylique, l'acide méthacrylique et/ou leurs sels métalliques et/ou leurs esters alkyliques, ou les copolymères greffés correspondants des monomères mentionnés sur des polyoléfines ou des copolymères éthylène/acétate de vinyle partiellement saponifiés, qui éventuellement sont polymérisés par greffage avec un acide carboxylique alpha-bêta-insaturé, et présentent un faible degré de saponification, ou les mélanges de ceux-ci.

10. Film tubulaire selon l'une des revendications 1 à 9, **caractérisé en ce que** la couche extérieure est constituée d'un mélange d'au moins un homopolyamide et/ou d'un copolyamide, qui sont fabriqués à partir de monomères qui sont choisis dans le groupe consistant en le caprolactame, le laurinelactame, l'acide oméga-aminoundécanoïque, l'acide adipique, l'acide azélaïque, l'acide sébacique, l'acide décanedicarboxylique, l'acide dodécanedicarboxylique, l'acide téréphtalique, l'acide isophtalique, la tétraméthylènediamine, la pentaméthylènediamine, l'hexaméthylènediamine, l'octaméthylènediamine et la xylylènediamine.

11. Film tubulaire selon la revendication 10, **caractérisé en ce que** la couche extérieure contient, outre l'homopolyamide et/ou le copolyamide, une polyoléfine modifiée, qui est fabriquée par copolymérisation d'éthylène ou de propylène et éventuellement d'autres alpha-oléfines linéaires ayant 3 à 8 atomes de carbone, avec des acides carboxyliques alpha-bêta-insaturés, de préférence l'acide acrylique, l'acide méthacrylique et/ou leurs sels métalliques et/ou leurs esters alkyliques, ou les copolymères greffés correspondants des monomères mentionnés sur des polyoléfines ou des copolymères éthylène/acétate de vinyle partiellement saponifiés, qui éventuellement sont polymérisés par greffage avec un acide carboxylique alpha-bêta-insaturé, et présentent un faible degré de saponification, ou les mélanges de ceux-ci.

12. Film tubulaire selon la revendication 10, **caractérisé en ce que** la couche extérieure contient, en plus de l'homopolyamide et/ou du copolyamide, un copolymère d'éthylène/alcool vinylique, la proportion de l'éthylène dans le copolymère éthylène/alcool vinylique étant comprise entre 27 et 48 % en moles, de préférence entre 27 et 38 % en moles.

13. Film tubulaire selon les revendications 10 à 12, **caractérisé en ce que** la proportion de la polyoléfine modifiée et/ou du copolymère éthylène/alcool vinylique est de 0 à 40 % en poids par rapport à la couche extérieure totale.

14. Film tubulaire selon l'une des revendications 1 à 13, **caractérisé en ce qu'**il est constitué d'un film tubulaire co-extrudé et biorienté, qui est thermofixé.

15. Film tubulaire selon l'une des revendications 1 à 14, **caractérisé en ce que** son épaisseur de paroi est de 30 à 100, de préférence de 50 à 90 µm.

16. Utilisation du film tubulaire selon l'une des revendications 1 à 15 pour l'emballage de viande, de viande avec os et d'aliments pâteux.

17. Sachet, **caractérisé en ce qu'**il est fabriqué à partir d'un film tubulaire selon l'une des revendications 1 à 15 par soudage ou thermosoudage de la couche intérieure avec elle-même.

18. Utilisation d'un sachet fabriqué selon la revendication 17 pour emballer des aliments pâteux, de la viande, ou de la viande avec os.
